# EUROPEAN PATENT APPLICATION

(11) **EP 4 804 059 A1**
(43) Date of publication of application: **09.09.2026**
(21) Application number: 26156477.7
(22) Date of filing: 04.02.2026
(51) Int. Cl.: G06F 21/32, E05G 1/00, G07C 9/00, G07C 9/37, A47B 51/00

(54) **SMART CONTAINER**

(30) Priority: 07.03.2025 US 202519074131
(71) Applicant: Shenzhen Guangjian Technology Co., Ltd., Shenzhen, Guangdong 518042 (CN)
(72) Inventor: ZHU, Li, Shenzhen, 518042 (CN); HU, Tao, Shenzhen, 518042 (CN); YAN, Qizhan, Shenzhen, 518042 (CN); LI, Fenghua, Shenzhen, 518042 (CN); HE, Mingli, Shenzhen, 518042 (CN); DUAN, Xing, Shenzhen, 518042 (CN)
(74) Representative: Bayramoglu et al.

(57) **Abstract**

A smart storage container includes a container body, a door, a lock, a biometric scanning device, an illumination system, and a controller. The biometric scanning device captures user biometric information to determine identity. Upon authentication, the controller unlocks the door and performs at least one identity-based operation, such as adjusting a motorized shelf or controlling the illumination system to provide personalized storage access. The motorized shelf may reposition horizontally, vertically, or tilt to optimize item retrieval. The illumination system may activate specific indicator lights or adjust brightness and direction based on the user's identity. The storage container may also include multiple compartments, each with dedicated access permissions. The controller may restrict access based on user attributes, such as age, and may integrate with temperature or humidity control systems for secure storage.

## Description

### TECHNICAL FIELD

The present invention relates to storage containers with controlled access, and more particularly to a smart storage container equipped with a biometric authentication system and personalized access and interior adjustments based on the user's identity.

### BACKGROUND

Storage containers such as safes, refrigerated cabinets, and secure lockers are commonly used to store valuable or restricted items. Traditional storage solutions rely on mechanical or electronic locks that require physical keys, passwords, or PIN codes for access. While effective in preventing unauthorized entry, these methods often lack user-specific adaptability and can be inconvenient for frequent use.

Recent advancements in biometric authentication, such as facial recognition, palm scanning, fingerprint identification, and iris identification, have improved security by enabling more personalized and tamper-resistant access control. However, conventional biometric storage solutions primarily focus on access authorization and do not provide further customization in terms of storage organization or retrieval assistance. For example, existing solutions do not adapt their internal configurations based on different users, nor do they facilitate guided retrieval of stored items.

Additionally, many storage systems are designed with static interiors, requiring users to manually locate and retrieve items. This can be inefficient, particularly in storage containers with multiple compartments or high-security enclosures. A system that intelligently adapts the storage configuration based on user identity such as by adjusting shelf positioning, illuminating specific compartments, or guiding the retrieval process-would significantly improve convenience, security, and user experience.

Therefore, there is a need for a smart storage container that integrates biometric authentication with adaptive interior mechanisms, allowing for secure, user-specific access while optimizing storage organization and retrieval efficiency.

### SUMMARY

A system comprising one or more computers can be configured to perform specific operations through software, firmware, hardware, or a combination thereof. The system, when in operation, executes these components to perform designated actions. Similarly, one or more computer programs may be designed to execute specific operations by including instructions that, when processed by a data processing apparatus, cause the apparatus to carry out those operations.

In one aspect, a smart storage container may include a container body with a door operably connected to it. The door is secured in a closed position by a lock. Inside the container body, a shelf is positioned to store items. The container also includes an illumination system for improved visibility and a biometric scanning device coupled to the container body. A controller, operably connected to both the biometric scanning device and the lock, is configured to determine a user's identity based on biometric information captured by the scanning device. Upon verifying the user's identity, the controller unlocks the door and performs at least one identity-based operation tailored to the user. These operations may include adjusting the shelf's position or controlling the illumination system in a manner customized for the specific user. Other embodiments of this aspect may include corresponding computer systems, apparatuses, and computer programs stored on one or more computer storage devices, each configured to execute the methods described.

The smart storage container may include a motorized shelf, and the controller may be configured to automatically adjust its position based on the authenticated user's identity. This adjustment facilitates the retrieval or placement of an item. The controller may reposition the shelf by extending it outward or adjusting it vertically to create additional storage space. In some embodiments, the motorized shelf may tilt to further optimize item retrieval. The motorized shelf may be mounted on a sliding rail system, enabling horizontal movement via at least two horizontally arranged sliding rails or vertical movement through at least two vertically arranged sliding rails, both powered by a motor.

The illumination system within the container body (e.g., on the interior wall of the container body or the door) may include multiple indicator lights. To enhance usability, the controller may selectively activate a subset of these lights based on the authenticated user's identity, guiding them to a specific item or compartment. If the container includes multiple compartments, the controller can identify the compartment associated with the authenticated user and activate the corresponding indicator lights to direct them to the correct storage area. The controller may also adjust the brightness or direction of the illumination system, with these settings customizable based on user preferences.

The biometric scanning device may include at least one indicator light that provides a visual cue corresponding to the unlocked compartment. Once the system verifies the user's identity, the indicator light may display a specific illumination pattern to signal which compartment has been unlocked. This pattern may include variations in shape, location, color, brightness, or blinking behavior. Additionally, the controller may estimate the user's age based on biometric data and restrict access to certain compartments if the user does not meet a predefined age threshold.

In some embodiments, the smart storage container may include multiple separate compartments, each with its own dedicated door and lock. The controller unlocks only the compartment corresponding to the authenticated user while keeping other compartments secured. At least one compartment may be designed as a controlled environment, incorporating a temperature-regulating device. The controller can adjust the compartment's temperature based on predefined settings suitable for the stored items.

The smart storage container may also include an inner storage compartment within the primary storage container. This inner compartment has its own door and lock, requiring additional authentication beyond what is needed to unlock the outer container. The biometric scanning device may be shared between the outer and inner locks, and in some implementations, unlocking the inner compartment requires simultaneous or continuous biometric scans from at least two different users. The controller ensures that the inner lock can only be unlocked after the outer lock has been disengaged.

The biometric scanning device may include a facial scanning device, a fingerprint scanning device, an iris recognition module, or a palm scanning device. It may be positioned on the container door, the container body, or another suitable location. Implementations of the described techniques may be realized through hardware, software, methods, or a combination thereof, and may be stored on a computer-readable medium.

In another aspect, a method may include capturing a user's biometric information via a biometric scanning device. The method further includes determining the user's identity based on the captured biometric information. If the user is authenticated, the method proceeds with unlocking the storage container's door. Once unlocked, the system performs at least one identity-based operation, such as adjusting the position of a motorized shelf vertically or horizontally to facilitate item retrieval or placement, and controlling the illumination system to provide user-specific lighting conditions within the container. Other embodiments may include corresponding computer systems, apparatuses, and computer programs stored on one or more computer storage devices, each configured to execute the described methods.

### BRIEF DESCRIPTION OF THE DRAWINGS

Certain features of various embodiments of the present technology are set forth with particularity in the appended claims. A better understanding of the features and advantages of the technology will be obtained by reference to the following detailed description that sets forth illustrative embodiments, in which the principles of the disclosure are utilized, and the accompanying drawings of which:
FIGs. 1A and 1B illustrate an example exterior of a smart container, according to one example embodiment.
FIGs. 2A and 2B illustrate an example interior of the smart container, according to one example embodiment.
FIGs. 3A and 3B illustrate another example interior of the smart container, according to one example embodiment.
FIG. 4 illustrates an example movable shelf in the smart container, according to one example embodiment.
FIG. 5 illustrates an example illumination system in the smart container, according to one example embodiment.
FIG. 6A illustrates an example cascaded configuration of the smart container, according to one example embodiment.
FIG. 6B illustrates example embodiments of the biometric scanning device of the smart container, according to one example embodiment.
FIG. 7 illustrates an example method for controlling access to the smart container, according to one example embodiment.
FIG. 8 illustrates an example block diagram of an example computer system in which various of the embodiments described herein may be implemented

### DETAILED DESCRIPTION OF EMBODIMENTS

In the following description, certain specific details are set forth in order to provide a thorough understanding of various embodiments of the disclosure. However, one skilled in the art will understand that the disclosure may be practiced without these details. Moreover, while various embodiments of the disclosure are disclosed herein, many adaptations and modifications may be made within the scope of the disclosure in accordance with the common general knowledge of those skilled in this art. Such modifications include the substitution of known equivalents for any aspect of the disclosure in order to achieve the same result in substantially the same way.

Unless the context requires otherwise, throughout the present specification and claims, the word "comprise" and variations thereof, such as, "comprises" and "comprising" are to be construed in an open, inclusive sense, that is as "including, but not limited to." Recitation of numeric ranges of values throughout the specification is intended to serve as a shorthand notation of referring individually to each separate value falling within the range inclusive of the values defining the range, and each separate value is incorporated in the specification as it were individually recited herein. Additionally, the singular forms "a," "an" and "the" include plural referents unless the context clearly dictates otherwise.

Reference throughout this specification to "one embodiment" or "an embodiment" means that a particular feature, structure or characteristic described in connection with the embodiment is included in at least one embodiment of the present disclosure. Thus, the appearances of the phrases "in one embodiment" or "in an embodiment" in various places throughout this specification are not necessarily all referring to the same embodiment, but may be in some instances. Furthermore, the particular features, structures, or characteristics may be combined in any suitable manner in one or more embodiments.

The present invention relates to a smart container with biometric authentication, automated shelving, or adaptive illumination systems for secure and user-specific storage. It enhances security and accessibility by allowing only authorized users to access stored items while dynamically adjusting internal configurations. This system is ideal for high-security storage, such as safes for valuables, pharmaceutical cabinets, and document lockers, ensuring restricted access in government, legal, financial, and healthcare settings. In retail and hospitality, it enables controlled access to age-restricted products, hotel minibars, and luxury goods, preventing unauthorized use.

Beyond indoor applications, the smart container is valuable for industrial and outdoor storage, including secure delivery lockers, warehouse inventory management, and construction tool storage. It supports contactless package retrieval for e-commerce and last-mile delivery, ensuring safe and efficient storage in residential, commercial, and unmanned locations.

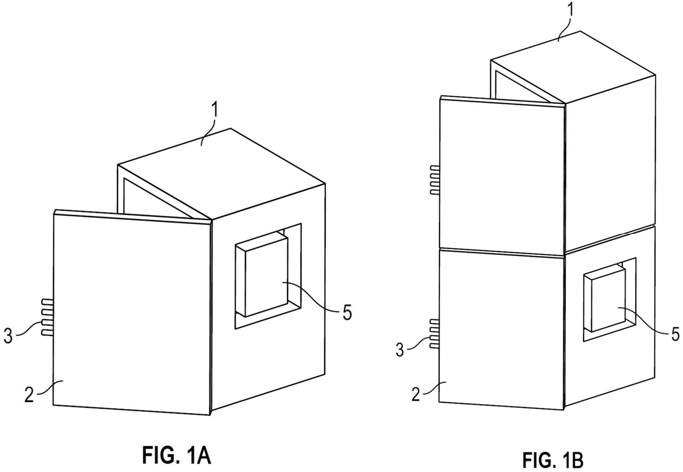

**FIGs. 1A and 1B** illustrate an example exterior of a smart container, according to one example embodiment.

**FIG. 1A** depicts a single-level smart container that includes a container body 1 forming an enclosed storage space, a door 2 operably connected to the container body to allow access, and a lock 3 that secures the door in a closed position. A biometric scanning device 5 is coupled to the container body and configured to capture biometric information from a user. The controller within the container is operably connected to both the biometric scanning device 5 and the lock 3, enabling identity-based authentication and access control. Upon successful biometric authentication, the controller unlocks the lock 3, granting access to the storage space.

FIG. 1B illustrates a two-level smart container configuration, which expands upon the single-level embodiment in FIG. 1A by incorporating an additional storage compartment with a corresponding second door and lock. This multi-compartment design allows for segmented access control, ensuring that different users may be granted access to specific compartments based on their biometric credentials. In some embodiments, a single biometric scanning device 5 is used to authenticate users and control both doors and locks individually, thereby reducing hardware costs while maintaining security. The controller, based on the verified user identity, determines which compartment should be unlocked and may perform identity-based operations, such as adjusting the position of an internal shelf or controlling the illumination system to guide the user to the appropriate storage area.

In various embodiments, the smart container further includes an illumination system (not shown in FIGs. 1A and 1B) disposed within the container body. Upon successful authentication, the controller may selectively activate a subset of indicator lights or adjust illumination brightness and direction to facilitate item retrieval. The container may also feature an adjustable shelf (not shown in FIGs. 1A and 1B), which can be repositioned or extended outward to provide enhanced accessibility based on user identity. These features enable efficient, personalized access to stored items while maintaining a high level of security and usability.

The biometric scanning device 5 used for authentication may use at least one of the following: a facial scanning device, a fingerprint scanning device, an iris recognition module, or a palm scanning device, allowing for flexibility in security implementations based on user preferences and operational requirements. While FIGs. 1A and 1B illustrate that the biometric scanning device 5 is disposed on the container body 1, in some embodiments, it may be disposed on the door 2 or other suitable locations to optimize usability and accessibility. The door 2 and the container body 1 of the smart container can be constructed from various materials, including metal, wood, or glass, depending on security needs, aesthetic preferences, or environmental conditions. Similarly, the lock 3 may be implemented using different locking mechanisms, such as a mechanical lock, an electronic lock, or a combination lock, providing adaptable security configurations for different applications.

In some embodiments, the smart container further includes a controller, which may be a computing device equipped with a processor and memory, responsible for managing various components of the container. The controller is operably coupled to the biometric scanning device 5 and is configured to control one or more smart functionalities of the container, including the lock 3, movable shelves, illumination system, and other controllable devices, such as humidifiers or temperature regulation systems. The controller may be disposed inside the container. Upon successful user authentication, the controller not only unlocks the door 2 but also executes identity-based operations, dynamically adjusting the internal environment and storage configuration to optimize accessibility and security based on the user's identity.

In some embodiments, the controller may be configurable through an external application, such as a web-based platform or a mobile application, enabling users to manage their access credentials, adjust operational settings, and monitor container activity remotely. Alternatively, an on-container user interface, such as a touchscreen, keypad, or voice-activated assistant, may be provided to allow direct interaction with the container. Through these interfaces, users can register their biometric information, set custom operational preferences, and configure the container's post-unlock functionalities. For example, upon authentication, the user may predefine operations such as moving a shelf horizontally or vertically to create additional space, adjusting the illumination system's direction or brightness to focus on a specific item or area, or setting environmental conditions such as humidity or temperature to preserve sensitive materials.

In some embodiments, the biometric scanning device 5, the controller, or both working collectively, may estimate additional user attributes beyond identity, such as age or gender, based on biometric data. These additional attributes allow for more granular control over access permissions and operational settings. For instance, the container may be configured to restrict access to certain compartments or specific items to users who meet an age requirement-such as preventing access to alcohol, firearms, or controlled substances for users below a legally defined age threshold.

In some embodiments, the biometric scanning device 5 of the smart container is implemented as a palm scanning device, providing a highly secure and reliable method of user authentication. A palm scanning device is an advanced biometric tool that identifies individuals based on at least one unique feature of their palms, including palm surface patterns, palm prints, and palm vein structures.

For example, a palm scanning device can operate through three primary recognition techniques. First, the system performs palm recognition, ensuring that the scanned object is indeed a palm and filtering out non-palm objects using computer vision technology. This step enhances security by preventing spoofing attempts with artificial or non-human objects. Once a valid palm is detected, the system performs palm print recognition by capturing infrared images of the palm surface, analyzing unique characteristics such as lines, creases, and texture patterns. These patterns are then compared against stored templates for authentication. The final step, palm vein recognition, uses infrared imaging to detect the unique vein patterns beneath the skin. Since hemoglobin in the veins absorbs infrared light, the captured vein patterns provide an additional internal biometric marker, making them nearly impossible to replicate or forge. Two or more of palm recognition, palm print recognition, and palm vein recognition may be implemented as the biometric scanning device 5 of the smart container.

In some use cases, palm scanning is preferred over fingerprint scanning for several reasons. Unlike fingerprints, which can be lifted from surfaces and potentially replicated, palm vein patterns are internal to the body and cannot be easily stolen or copied. This makes palm scanning a highly secure anti-spoofing technology. Additionally, palm vein patterns remain consistent over time, unaffected by aging, environmental conditions, or physical wear, whereas fingerprints may degrade due to skin damage, moisture, or dirt. Palm scanning may be implemented as contactless, eliminating the need for physical touch and reducing the risk of cross-contamination, which is particularly beneficial in high-traffic environments or hygiene-sensitive settings.

In some use cases, palm scanning also provides superior privacy and security compared to facial recognition. Since palm vein patterns are internal and invisible to others, they cannot be captured or replicated without the user's knowledge, unlike facial images, which can be photographed or reconstructed from digital sources. Facial recognition systems also face accuracy challenges due to lighting conditions, aging, and facial expression variations, whereas palm vein patterns remain highly stable and consistent over time.

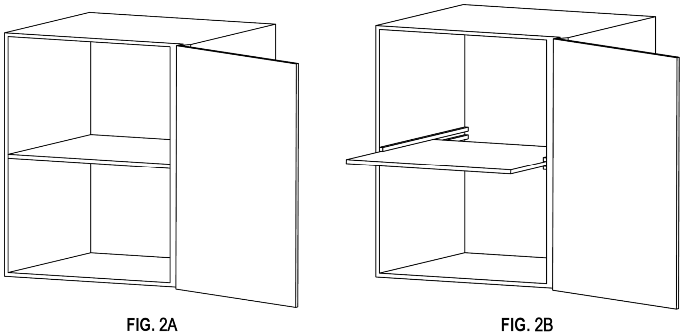

FIGs. 2A and 2B illustrate an example interior of the smart container, according to one example embodiment. FIG. 2A depicts a two-compartment configuration, where the container body 1 includes a shelf that divides the interior into an upper compartment and a lower compartment. This design allows for the organization of stored items into separate sections while maintaining a secure and structured storage layout. The shelf provides separation between the compartments, ensuring that different categories of items remain segregated.

**FIG. 2B** illustrates an embodiment where the shelf is motorized and movable, allowing for dynamic storage configurations based on user identity. A controller is operably coupled to the motorized shelf and is configured to automatically adjust its position as part of an identity-based operation. Depending on the authenticated user and their predefined settings, the motorized shelf may extend outward using sliding rails to facilitate item retrieval (as shown in FIG. 2B) or adjust its height vertically (not shown in FIG. 2B) to create additional space.

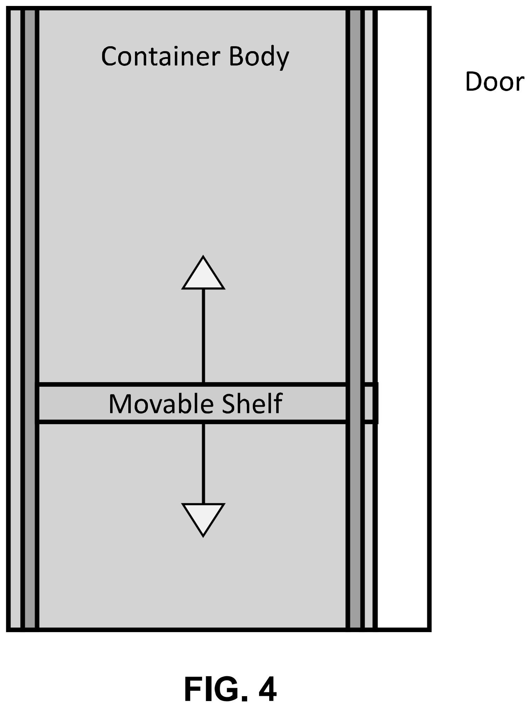

In some embodiments, the controller may adjust the motorized shelf's position in various ways. The shelf may be configured to move horizontally outward from the container body to present items for easier access. Alternatively, the shelf may be vertically repositioned by driving at least two vertically arranged sliding rails via a motor (as shown in **FIG. 4**), allowing it to move upward or downward to accommodate different storage needs.

In another variation, the motorized shelf may tilt (not shown in FIG. 2B or FIG. 4) to increase available space for retrieval or placement, providing additional flexibility for organizing and accessing items. These movement mechanisms can be implemented using a motorized sliding rail system, with at least two rails arranged in horizontal or vertical orientations, allowing the shelf to be dynamically positioned based on the stored items and user preferences.

In some embodiments, the smart container is further configured to detect whether an item has been placed on or removed from the motorized shelf and, based on this detection, automatically revert the position adjustment of the shelf. This feature ensures that after an item has been retrieved, the shelf returns to its original position. Similarly, when an item is placed on the shelf, the system confirms the placement and subsequently restores the shelf to its default position, ensuring secure storage.

To enable this functionality, the smart container may install at least one detection mechanism, such as a weight sensor, a light sensor, a camera, a motion sensor, or any combination thereof. A weight sensor may be disposed beneath the motorized shelf, detecting changes in weight when an item is added or removed. When the system identifies a weight reduction indicating item retrieval, the controller signals the motorized shelf to return to its default position. Similarly, when the sensor detects an increase in weight, confirming that a new item has been placed, the controller ensures the storage process is completed before reverting the shelf to its original location.

Alternatively, the smart container may use an optical detection system, such as a light sensor or a camera (e.g., a depth camera), to monitor item placement. A light sensor positioned above or beside the shelf may detect changes in light intensity or shadows, confirming whether an item has been removed or added. In a more advanced implementation, an integrated camera system may analyze real-time visual data to determine the presence or absence of objects on the shelf. The controller processes this visual information and determines whether to restore the shelf's position based on detected changes.

In some implementations, a motion sensor may be included within the container to detect the physical act of placing or retrieving an item. This sensor may identify user hand movements or object displacement, sending a signal to the controller to revert the shelf's position accordingly. Additionally, the system may combine multiple detection methods, such as a weight sensor and a camera, to enhance accuracy and reliability in determining whether an item has been successfully placed or removed.

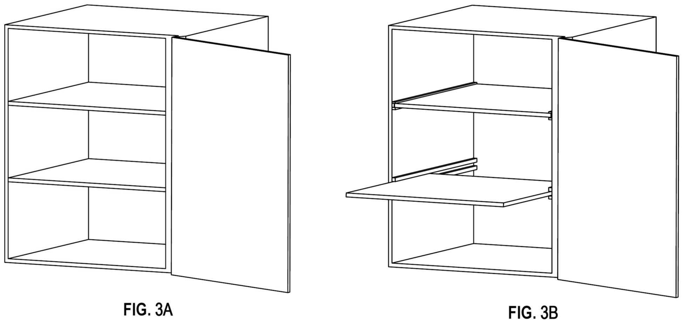

FIGs. 3A and 3B illustrate another example interior of the smart container, according to one example embodiment. FIG. 3A depicts a three-compartment configuration, where the container body 1 includes two fixed shelves that divide the interior into three vertically stacked compartments. Depending on the use case, the smart container may include more compartments. In some embodiments, the compartments may be arranged horizontally, allowing side-by-side storage, or in a combination of vertical and horizontal configurations, optimizing space utilization and accessibility based on specific user needs.

**FIG. 3B** illustrates an alternative embodiment where at least one of the shelves is movable, providing a more adaptive storage system. A movable shelf may be coupled with a motor and sliding rails, similar to the embodiment described in FIG. 2B, allowing it to extend outward, adjust its height, or tilt for easier item retrieval. If multiple shelves are configured as movable, they may be programmed with the same or different movement capabilities. For instance, both shelves may be configured to move horizontally, allowing different compartments to extend outward independently. Alternatively, one shelf may be designed to move horizontally, while another may move vertically, expanding or compressing compartment space dynamically to accommodate various storage requirements.

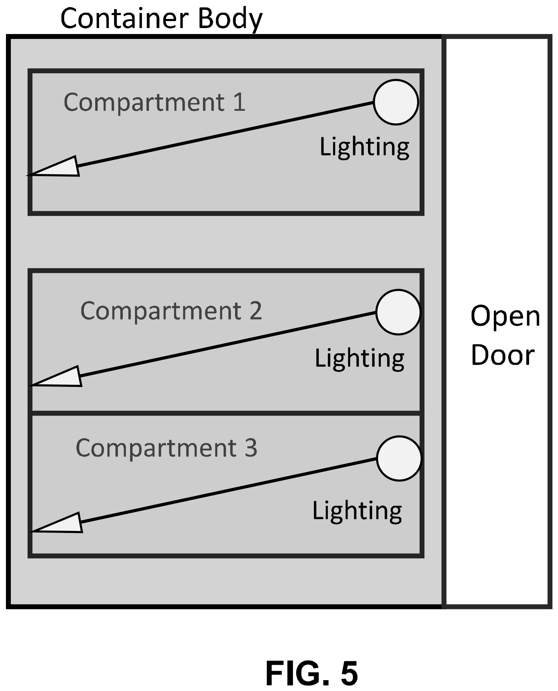

**FIG. 5** illustrates an example illumination system in the smart container, according to one example embodiment. The specific embodiment shown in FIG. 5 depicts a three-compartment configuration, where each compartment is equipped with a dedicated lighting device, such as an indicator light. The configuration is just for illustration purpose, depending on the use case, the smart container may include fewer or more compartments, arranged in various ways, and some compartments may have shared lightning devices.

In some embodiment, the illumination system of the smart container includes a plurality of indicator lights, which the controller selectively activates according to the user's identity. When a user accesses the smart container, the controller determines the specific compartment or item associated with that user and activates a subset of the indicator lights accordingly. This personalized lighting system helps guide the user directly to their authorized compartment or stored item, improving efficiency and user experience. For example, if a user is permitted to access only the middle compartment, the corresponding indicator light for that compartment will turn on, while the other compartments remain unlit, thereby reinforcing restricted access.

In some embodiments, the controller further customizes the illumination system by adjusting the brightness or direction of the lights based on the user's preferences. A user may preconfigure the illumination settings so that when they access the container, the light brightness increases for better visibility, or the light direction shifts to focus on a specific area or item in the compartment. This identity-driven lighting adjustment enhances usability, particularly in low-light environments or high-security storage applications, where users need precise guidance to retrieve items quickly.

In some embodiments, the illumination system may also serve as a compartment identification mechanism. In some embodiments, the biometric scanning device 5 includes at least one indicator light as a part of the illumination system, which may be configured as a visual cue corresponding to the unlocked compartment. Once the biometric scanning device verifies the user's identity, the container unlocks the designated compartment, and the indicator light is configured to display a specific illumination pattern to signal the unlocked compartment.

The illumination pattern may vary based on different attributes and user-defined settings. For instance, the illumination system can adjust its shape, location, color, brightness, or blinking pattern to indicate the specific compartment that has been accessed. In some cases, a blinking indicator light may be used for heightened visibility, while in others, a specific color-coded system may be employed to distinguish between different types of compartments (e.g., red for restricted compartments, green for general access, blue for temperature-controlled storage).

As another example, the indicator light may change colors dynamically depending on whether the user has full administrative access, limited access, or age-restricted access to a specific compartment. A steady white light may indicate general access, whereas a pulsing yellow light may serve as a warning indicator for a compartment containing sensitive or hazardous materials. In advanced implementations, the illumination system may project patterns or symbols onto the compartment door or the container body to visually guide the user, such as a flashing arrow pointing toward the unlocked compartment.

As yet another example, in storage containers designed for temperature-sensitive items, the system may include thermal-responsive indicator lights, where blue lighting indicates a cooled storage compartment, and orange or red lighting signals a heated compartment. In some cases, the illumination system may also integrate sound or haptic feedback, providing a beeping sound or slight vibration when an access event is triggered, further enhancing user awareness and interaction.

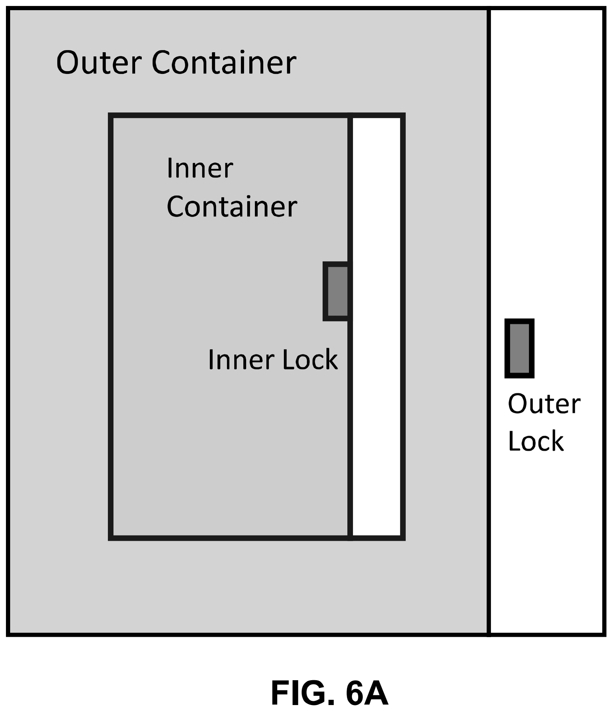

**FIG. 6A** illustrates an example cascaded configuration of the smart container, according to one example embodiment. The configuration in FIG. 6A features a two-layer security system, in which a primary (outer) storage container encloses an inner storage container, providing an additional layer of security for high-value or restricted items. The outer container includes an outer door secured by an outer lock, while the inner storage container has an inner door secured by an inner lock.

In such cascaded configuration, the controller of the smart container may be operably coupled to both the outer lock and the inner lock, allowing for tiered access control. In some embodiments, the controller applies different access permissions for each lock, such that unlocking the inner container requires an additional authentication step beyond what is required to unlock the outer container. For example, a user may be required to provide a secondary biometric scan, enter a passcode, or use multi-factor authentication to gain access to the inner compartment, ensuring that only authorized personnel with the proper credentials can retrieve the most sensitive items.

In some embodiments, the biometric scanning device may be shared between the outer and inner locks, meaning a single authentication device is used to control access to both storage layers. However, to unlock the inner storage container, the system may require simultaneous or sequential biometric scans from at least two different users, ensuring that dual-authorization protocols are followed.

Additionally, in some embodiments, the controller enforces a sequential unlocking mechanism, requiring that the outer lock be unlocked before the inner lock can be accessed. This prevents direct access to the inner container without first opening the outer storage compartment, adding an extra layer of security and access control.

In some implementations, the illumination system may be integrated with this cascaded storage design. Once the outer container is unlocked, the illumination system may highlight the inner container, guiding the user toward the next required authentication step. If dual authentication is required, the system may provide visual or audio prompts to instruct users to proceed with the second verification step before the inner compartment becomes accessible. This cascaded security model ensures a highly controlled access structure, making the smart container ideal for multi-level security applications.

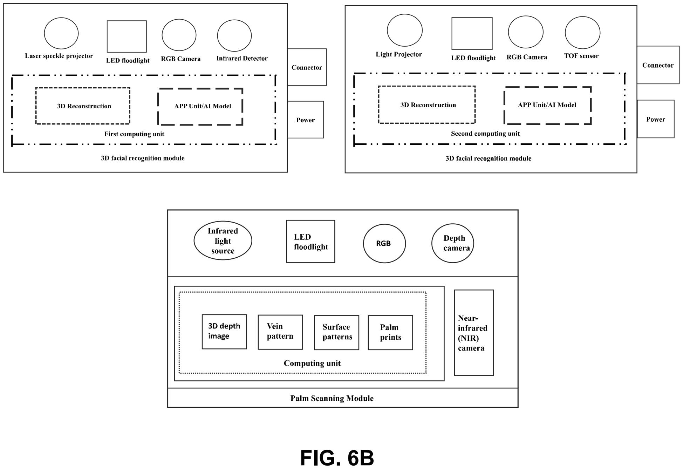

**FIG. 6B** illustrates example embodiments of the biometric scanning device of the smart container, according to one example embodiment.

In the first embodiment illustrated in FIG. 6B, the biometric scanning device includes a 3D facial recognition module. The 3D facial recognition module includes a first computing unit, a laser speckle projector, and an infrared detector, all of which are electrically connected. The laser speckle projector emits a structured infrared light pattern onto the target user's face, creating a speckled infrared projection. The infrared detector captures the reflection of this infrared speckle pattern and records the resulting optical distortion caused by the three-dimensional contours of the user's face. The first computing unit then processes (e.g., using a 3D reconstruction unit) the detected distortion or displacement of the infrared speckle pattern and generates a corresponding depth facial image, which serves as a 3D representation of the user's face for identity verification.

To enhance safety and prevent accidental overexposure to infrared radiation, the 3D facial recognition module may include a second proximity sensor. When the sensor detects that a user's face is too close to the module-such as being within 15 cm of the device the laser speckle projector automatically shuts off to avoid potential discomfort or interference.

In some implementations, the 3D facial recognition module further incorporates an RGB camera module and an LED floodlight. The RGB camera captures a color image of the user's face, while the LED floodlight projects visible light onto the user's face to enhance image clarity. The infrared detector simultaneously captures an infrared facial image based on the reflection of the LED floodlight's illumination. The first computing unit processes both the infrared and RGB images to determine whether the detected face belongs to a pre-authorized user stored in a whitelist database. This whitelist authentication may be performed using a pre-trained facial recognition model (e.g., through the APP unit), allowing only preregistered users to access the smart container.

In the second embodiment illustrated in FIG. 6, another 3D facial recognition module may include a second computing unit, a light projector, and a Time-of-Flight (TOF) sensor. The light projector emits infrared floodlight onto the target user's face, while the TOF sensor receives the reflected infrared light and generates multiple infrared facial images over a predefined collection period. The second computing unit then processes the phase difference across these multiple images to compute a highly detailed depth map of the user's facial surface.

In the third embodiment illustrated in FIG. 6, the biometric scanning device uses a palm scanning device for user authentication. The palm scanning device provides high-security biometric verification by analyzing unique palm features, including palm surface patterns, palm prints, and palm vein structures.

In one embodiment, the palm scanning device includes a computing unit, an infrared light source and a near-infrared (NIR) camera, all operably connected to process and verify the user's palm data. During operation, the infrared light source emits NIR illumination onto the user's palm, which is positioned over the scanning module. The NIR camera captures the vein patterns beneath the skin, as hemoglobin in the veins absorbs infrared light, forming a distinct vascular pattern unique to each individual. The computing unit processes the vein pattern, comparing against pre-stored biometric data to authenticate the user's identity.

The palm scanning device is highly secure because vein patterns are internal to the body and cannot be easily forged or replicated. Unlike fingerprints, which may degrade over time due to wear, palm vein patterns remain stable, ensuring consistent long-term authentication performance. Additionally, because this technology is contactless, it eliminates concerns about hygiene and cross-contamination, making it ideal for shared storage applications where multiple users access the same container.

In some implementations, the palm scanning device includes an anti-spoofing mechanism, which prevents unauthorized access attempts using fake palm images or artificial models. The system may include a second proximity sensor, which detects whether the user's palm is too close to the scanning device and adjusts the illumination intensity accordingly. If the sensor detects an object closer than a predefined threshold, such as 5 cm, the system may temporarily disable the scanner to prevent accidental misreadings or spoofing attempts.

In another embodiment, the palm scanning device further integrates an RGB camera and an LED floodlight to enhance authentication accuracy. The RGB camera captures a full-color image of the user's palm, which can be used for surface palm print recognition by analyzing the lines, creases, and ridges on the palm's exterior. The LED floodlight ensures consistent lighting conditions, allowing for high-quality image capture in varying ambient environments. The computing unit processes the RGB palm image and the vein pattern, ensuring that both biometric features are analyzed for identity verification.

The following description describe a few real-world embodiments that implement the above-described smart containers.

### Embodiment 1:

In some embodiment, the smart container is designed for single-purpose storage applications, such as a safe, a refrigerated cabinet for alcohol, a humidity-controlled storage unit, or other specialized storage containers. Using the numerical labels in FIGs. 1A and 1B, the container includes a container body 1, a door 2, a lock 3, and a biometric scanning device 5, which may be configured as a palm recognition module or a facial recognition module. The container body 1 may be configured as a single-layer or multi-layer structure, accommodating different storage needs based on item size and quantity. Additionally, the interior of the container may be equipped with various organizational features, such as storage compartments, drawers, or sliding rails, depending on the specific application requirements.

The door 2 is operably connected to the container body 1 and functions to enclose the storage space, ensuring protection of stored items. The door may be constructed from metal, wood, or glass, allowing customization based on security needs and aesthetic preferences. In some embodiments, the door includes a handle or other opening mechanisms, facilitating user access after successful authentication. The lock 3 provides a security mechanism to prevent unauthorized access and may be implemented as a mechanical lock, an electronic lock, or a combination lock, depending on user preferences and security requirements.

The biometric scanning device 5 is positioned on the door 2 or the container body 1 and serves as an authentication mechanism. This device may support palm recognition, facial recognition, or other biometric authentication methods. When a user scans their biometric information, the controller determines their identity and, upon successful authentication, unlocks the lock 3 and grants access to the storage space. Additionally, the controller is configured to perform identity-based operations, such as adjusting internal shelving, activating indicator lights, or modifying illumination settings based on the authenticated user's preferences.

In some embodiments, the container body 1 includes at least two lighting elements, which may be independently activated. The illumination system is configured to selectively light up specific areas based on the user's identity as determined by the biometric scanning device 5. The lighting system enhances visibility inside the container, assisting users in quickly locating and retrieving items. For example, if a specific item is stored in a designated area, the corresponding lighting element will automatically turn on, providing clear visual guidance for the user. The brightness and illumination direction may also be adjusted dynamically based on predefined user settings.

In some embodiments, the container body 1 further includes at least two indicator lights, which function as visual guides to indicate item locations or statuses. Similar to the illumination system, the indicator lights can be adjusted dynamically based on user authentication data. For instance, when a user needs to retrieve a specific item, the corresponding indicator light will be activated, directing the user to the precise storage location.

In additional embodiments, the container body 1 includes at least one motorized shelf, configured to adjust its position dynamically based on biometric authentication data. The controller manages the movement of the motorized shelf, allowing it to expand storage space, reposition items, or push items outward for easier access. The motorized shelf may be adjusted horizontally, vertically, or tilted depending on user-defined preferences. For example, if a user frequently accesses a particular item, the shelf may be programmed to automatically extend outward upon authentication, allowing for quick and convenient retrieval. The controller may further customize the movement of the shelf based on individual user profiles, ensuring a personalized and intelligent storage experience.

### Embodiment 2:

In another embodiment, the smart container may be designed as a multi-purpose storage unit with at least two independent compartments, each capable of being individually accessed and controlled. The container body 1 includes at least two doors 2, at least two locks 3, and a biometric scanning device 5, which may be a palm recognition module or a facial recognition module. The biometric scanning device 5 may be located on the doors 2 or the container body 1 and is used to authenticate users before unlocking one or more compartments. The controller is operably coupled to the biometric scanning device 5 and controls the selective unlocking of compartments based on user authentication data.

In some embodiments, the two or more independent compartments may be arranged in various configurations, such as side-by-side (horizontally aligned), stacked (vertically aligned), or distributed at different heights and positions. This flexible compartment arrangement allows the smart container to be customized for different storage needs, such as a refrigerated section for perishable food items and a dry compartment for documents, jewelry, or other valuables. Each compartment may have distinct environmental settings, allowing for precise control of temperature, humidity, or security levels.

In certain embodiments, the illumination system includes a plurality of indicator lights, which may be used to identify which compartment is unlocked. The controller may adjust the shape, position, color, brightness, or blinking pattern of the indicator lights to visually indicate the currently accessible compartment. For example, when a user successfully authenticates, the indicator light associated with the authorized compartment may illuminate in a distinct color, guiding the user to the correct section. Different colors may be used to indicate storage conditions, such as blue for a refrigerated compartment, yellow for a humidity-controlled compartment, and green for general storage.

Additionally, in some embodiments, the smart container may include a physical interface such as buttons or a touchscreen, allowing the user to pre-select a specific compartment before authentication. After selecting the desired compartment, the biometric scanning device 5 verifies the user's identity, and the controller unlocks only the corresponding door. Each compartment is independently controlled, with its own electronic or mechanical lock, ensuring secure, compartmentalized access management.

In some embodiments, at least one of the compartments includes a motorized shelf, which is configured to adjust its position based on the authenticated user's preferences. The motorized shelf may expand storage space, tilt for easier access, or automatically push stored items outward when the compartment is unlocked. The controller manages the movement of the shelf in response to user-specific preferences, enabling a customized retrieval experience.

For enhanced storage conditions, at least one of the compartments may be configured as a temperature-controlled environment, incorporating insulation layers, temperature sensors, cooling units, or heating elements to maintain a stable internal temperature. Similarly, in some embodiments, at least one compartment may be equipped with a humidity control system, including humidity sensors, controllers, and humidifiers, ensuring that stored items remain in optimal environmental conditions.

In certain embodiments, at least one compartment is equipped with ultraviolet (UV) sterilization technology, enabling UV disinfection of stored items. This is particularly useful for medical storage, high-value electronics, or sensitive materials, as the UV lighting system kills bacteria and prevents contamination while protecting items from UV damage through controlled exposure.

### Embodiment 3:

In another embodiment, the smart container is designed with a dual-layer security system, providing two levels of authentication and access control. This cascaded security design consists of an outer container and an inner storage compartment, each secured with independent locking and authentication mechanisms. The outer container serves as the primary enclosure, while the inner storage compartment provides an additional layer of protection for high-value or restricted items. The system employs a biometric scanning device 5, such as a facial recognition or palm scanning module, to regulate access.

The outer container body 1 forms the main structure of the smart container, housing the inner storage compartment. It is constructed from high-strength materials, offering anti-tampering, anti-prying, and impact-resistant properties. The outer door 2 encloses the storage space and is equipped with a lock 3 and a biometric scanning device 5 for access control. The controller, operably coupled to the biometric scanning device, ensures that only authorized users can unlock the outer compartment. The lock 3 may be implemented as an electronic lock, preventing unauthorized access unless the biometric authentication is successfully completed.

Inside the outer container, an inner storage compartment provides an additional level of restricted access. The inner compartment has its own door (inner door) and lock (inner lock), ensuring that even if a user gains access to the outer container, they must undergo additional authentication to open the inner storage space. The biometric scanning device 5 may be shared between the outer and inner locks, or a dedicated secondary authentication step may be required for unlocking the inner compartment. In some embodiments, the authentication requirements for the inner compartment differ from the outer compartment, ensuring that only users with the proper access level can retrieve specific stored items.

In some implementations, the smart container requires dual-user authentication to access the inner storage compartment. The biometric scanning device 5 may be configured to require simultaneous or sequential authentication from at least two different users, ensuring that no single user can unlock the inner compartment alone. This feature is particularly useful for high-security environments, such as government agencies, financial institutions, or pharmaceutical storage, where restricted access policies require dual approval.

The smart container is equipped with a sequential unlocking mechanism, ensuring that the outer door must be successfully unlocked before the inner compartment can be accessed. The controller enforces this access sequence, preventing unauthorized users from attempting to bypass security protocols. This tiered access structure adds an additional layer of control, particularly for classified document storage, controlled substances, or secure financial vaults.

In some embodiments, the smart container includes an integrated alarm system. If an unauthorized access attempt is detected, or if the biometric authentication fails multiple times, the controller triggers an alarm. The alarm system may be configured to emit an audible or visual alert to notify nearby personnel of a security breach, send a security alert to a central monitoring system, providing real-time access logs and security event tracking, or temporarily disable authentication attempts after a set number of failed access attempts, preventing brute-force attacks.

### Embodiment 4:

In another embodiment, the smart container includes a motorized shelf system that enables dynamic storage configurations based on user authentication and predefined preferences. The movable shelf is installed within the container body 1 and is configured to move either horizontally or vertically, allowing for optimized storage space and easier retrieval of stored items. The controller, operably coupled to the biometric scanning device 5, determines the user's identity and adjusts the position of the shelf accordingly to facilitate access.

In some implementations, the motorized shelf is mounted on a pair of horizontally arranged sliding rails within the container body. A motor is coupled to the sliding rail system, enabling synchronized movement of the shelf. Upon user authentication, the shelf may be extended outward to push an item forward for retrieval or retracted inward to securely store an item within the container. The horizontal movement allows for seamless item retrieval without requiring the user to reach deep into the storage space.

In other implementations, the motorized shelf is mounted on at least two vertically arranged sliding rails, allowing it to move upward or downward within the container. The vertical sliding system includes a motor that drives the synchronized movement of the rails, repositioning the shelf to create additional storage space or to facilitate retrieval. This configuration is particularly useful for multi-level storage containers, where users may need access to different shelving positions depending on their identity and storage permissions.

### Embodiment 5:

In another embodiment, the smart container functions as a shared storage system, incorporating depth cameras, network communication modules, and intelligent monitoring capabilities to facilitate real-time tracking and management of stored items. This embodiment is particularly suitable for shared-use storage systems, such as rental lockers for musical instruments, firearms storage with automated verification, or selfservice rental stations that track item usage, condition, and pricing based on predefined metrics.

The container body 1 includes at least one depth camera, which is used to monitor the integrity, condition, and status of stored items. In some implementations, at least two depth cameras are installed at different angles within the container, allowing for three-dimensional reconstruction of the stored objects. The system stitches together point cloud data from multiple depth cameras to generate a comprehensive 3D representation of the stored item, which is then analyzed to determine whether the object is intact, missing parts, or damaged. In specialized applications, such as firearm storage, the system may be configured to analyze specific object attributes, such as the safety switch position, ensuring that the item is stored securely.

The smart container also includes a network transceiver, allowing it to communicate with external devices such as mobile phones or remote monitoring systems. This feature enables real-time status updates, allowing users or administrators to remotely check the condition of the items stored inside the container. The remote access functionality enhances security and operational efficiency, enabling storage facilities to be managed without requiring physical inspection.

In a shared storage scenario, such as a rental locker system, the smart container may automatically calculate usage fees based on various parameters, including weight, volume, or quantity changes. When weight-based pricing is used, the container is equipped with a weighing scale, which detects the reduction in weight when an item is removed and calculates the corresponding charge. To ensure accurate monitoring, a camera module is also included to verify whether the removed object is the same as the original stored item and whether any foreign substances have been added.

For volume-based pricing, the depth cameras measure the change in volume within the container and detect whether the item has been replaced or altered. Similarly, for quantity-based pricing, a camera module detects the number of items removed, calculating the corresponding charge based on the detected reduction in item count.

Additionally, the smart container may include a barcode recognition module to identify barcode labels attached to stored items. By utilizing barcode scanning technology, the system can automatically record the entry and exit of objects, enabling seamless automated billing and inventory tracking. In some embodiments, a combination of weight measurement and depth cameras is used to verify whether the stored object has been tampered with, replaced, or mixed with foreign substances, ensuring greater accuracy in shared-use applications.

### Embodiment 6:

In another embodiment, the smart container includes a control screen, which allows users to select specific stored items, enhancing convenience and accessibility, particularly when multiple items are stored within the container. The control screen enables intelligent item selection and retrieval assistance, reducing the need for users to manually search for objects inside the container. Upon selection, the system may either highlight the chosen item using internal indicator lights or automatically adjust the storage configuration to push the item forward for retrieval.

In one implementation, the control screen is externally mounted on the container body 1 and utilizes touchscreen technology, providing an intuitive and interactive interface. The touchscreen supports various input methods, such as tapping, swiping, and scrolling, allowing users to efficiently browse stored items and select a specific object. Once an item is selected, the user undergoes biometric authentication via the biometric scanning device 5, such as palm or facial recognition. After successful authentication, the corresponding indicator light inside the container illuminates, guiding the user to the correct item location. Simultaneously, the cabinet door 2 unlocks and opens automatically, allowing the user to retrieve the item with ease.

In some embodiments, the smart container features a transparent door, enabling users to visually inspect the stored contents without opening the container. This design improves efficiency and user experience, as users can identify the desired item before initiating the retrieval process. The transparent door can be constructed from durable materials, ensuring security while maintaining visibility.

In another implementation, the smart container leverages user behavior data to personalize the retrieval process. Upon biometric authentication, the system automatically displays frequently accessed items on the control screen, allowing users to quickly select a commonly used object. If the user confirms their selection, or if no interaction occurs within a predefined time, the system automatically proceeds with item retrieval by unlocking the door and adjusting the internal storage configuration to push the selected item forward. This predictive retrieval feature streamlines access, reducing interaction time and improving user efficiency.

In some embodiments, the controller integrates both indicator lights and motorized shelving systems, ensuring that items are visually highlighted and physically repositioned for easy retrieval. When an item is selected, the corresponding indicator light illuminates, while a motorized shelf may extend outward or adjust its height, making retrieval even more convenient.

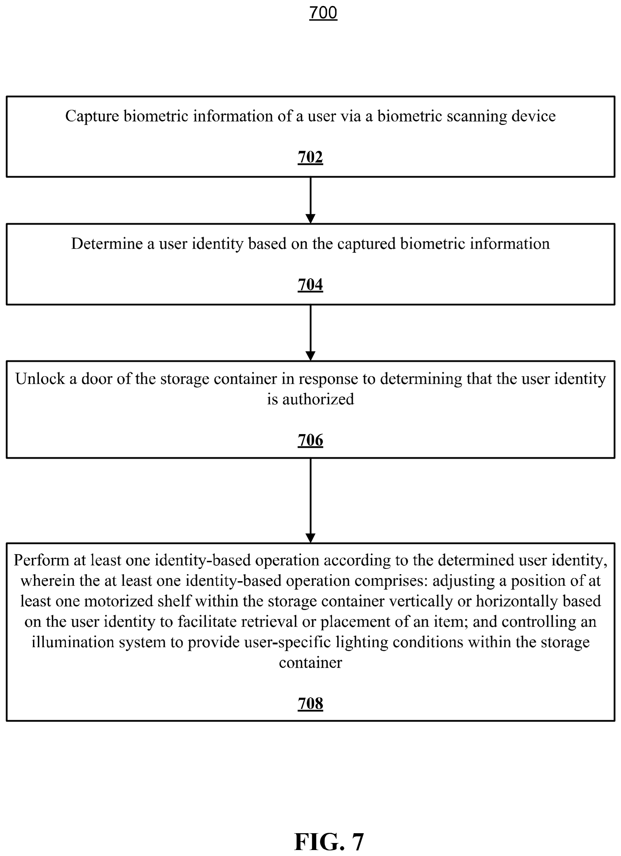

**FIG. 7** illustrates an example method for controlling access to the smart container, according to one example embodiment.

In some implementations, one or more steps of process 700 may be performed by a computing device associated with the smart container. The process begins with capturing the biometric information of a user via a biometric scanning device (block 702). For example, the device may capture biometric data, such as facial recognition, palm scanning, fingerprint scanning, or iris recognition, using the biometric scanning device as described above.

Next, process 700 includes determining the user's identity based on the captured biometric information (block 704). The device processes the biometric data and matches it against stored credentials to verify the user's identity. If the user is successfully authenticated, process 700 proceeds to unlocking the door of the storage container (block 706). In this step, the device releases the lock securing the door, granting access to the authenticated user.

Once access is granted, process 700 includes performing at least one identity-based operation according to the verified user identity (block 708). The identity-based operation may include adjusting the position of at least one motorized shelf inside the storage container either vertically or horizontally to facilitate retrieval or placement of an item. Additionally, the system may control the illumination system to provide customized lighting conditions, such as adjusting brightness, color, or direction to highlight a specific compartment or item based on the user's identity.

Although FIG. 7 illustrates specific steps of process 700, the process may include additional steps, fewer steps, alternative steps, or steps arranged in a different order depending on the implementation. Additionally, two or more of the steps in process 700 may be performed concurrently rather than sequentially to optimize processing efficiency.

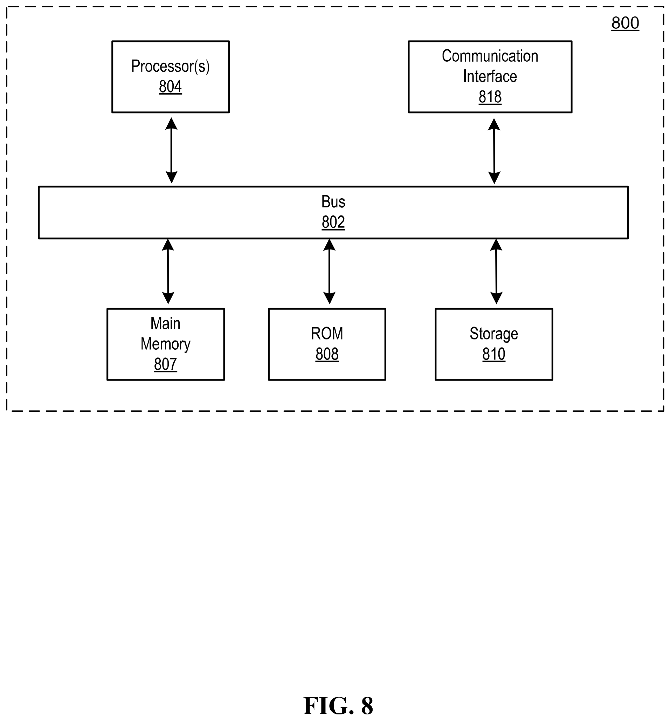

**FIG. 8** illustrates an example block diagram of an example computer system 800 in which various of the embodiments described herein may be implemented. The computer system 800 includes a bus 802 or other communication mechanism 818 for communicating information, one or more hardware processors 804 coupled with bus 802 for processing information. Hardware processor(s) 804 may be, for example, one or more general purpose microprocessors.

The computer system 800 also includes a main memory 807, such as a random-access memory (RAM), cache and/or other dynamic storage devices, coupled to bus 802 for storing information and instructions to be executed by processor 804. Main memory 807 also may be used for storing temporary variables or other intermediate information during execution of instructions to be executed by processor 804. Such instructions, when stored in storage media accessible to processor 804, render computer system 800 into a special-purpose machine that is customized to perform the operations specified in the instructions.

The computer system 800 further includes a read only memory (ROM) 808 or other static storage device coupled to bus 802 for storing computer instructions for processor 804. A storage device 810, such as a magnetic disk, optical disk, or USB thumb drive (Flash drive), etc., is provided and coupled to bus 802 for storing information and instructions.

The computing system 800 may include a user interface module to implement a GUI that may be stored in a mass storage device as executable software codes that are executed by the computing device(s). This and other modules may include, by way of example, components, such as software components, objectoriented software components, class components and task components, processes, functions, attributes, procedures, subroutines, segments of program code, drivers, firmware, microcode, circuitry, data, databases, data structures, tables, arrays, and variables.

The foregoing description of the present disclosure has been provided for the purposes of illustration and description. It is not intended to be exhaustive or to limit the disclosure to the precise forms disclosed. The breadth and scope of the present disclosure should not be limited by any of the above-described exemplary embodiments. Many modifications and variations will be apparent to the practitioner skilled in the art. The modifications and variations include any relevant combination of the disclosed features. The embodiments were chosen and described in order to best explain the principles of the disclosure and its practical application, thereby enabling others skilled in the art to understand the disclosure for various embodiments and with various modifications that are suited to the particular use contemplated. It is intended that the scope of the disclosure be defined by the following claims and their equivalence.

## Claims

1. A storage container, comprising:
a container body (1),
a door (2) operably connected to the container body (1),
a lock (3) securing the door (2) in a closed position,
a shelf positioned inside the container body (1),
an illumination system disposed within the container body (1) or on the door (2),
a biometric scanning device (5) coupled to the container body (1), and
a controller, operably coupled to the biometric scanning device (5) and the lock (3), configured to:
determine a user identity of the user based on biometric information captured by the biometric scanning device (5);
based on the determined user identity, unlock the door (2), and perform at least one identity-based operation according to the user identity, wherein the at least one identity-based operation comprises controlling the shelf or the illumination system in a manner customized to the determined user identity.

2. The storage container of claim 1, wherein the shelf comprises at least one motorized shelf, and to perform the at least one identity-based operation according to the user identity, the controller is configured to:
automatically adjust a position of the at least one motorized shelf based on the user's identity to facilitate retrieval or placement of an item.

3. The storage container of claim 2, wherein to adjust the position of the at least one motorized shelf, the controller is configured to:
extend the at least one motorized shelf outward to facilitate retrieval or placement of an item; or
vertically reposition the at least one motorized shelf to create additional space for easier retrieval or placement of an item.

4. The storage container of claim 2, wherein to adjust the position of the at least one motorized shelf, the controller is configured to:
tilt the at least one motorized shelf to create additional space for easier retrieval or placement of an item.

5. The storage container of claim 2, wherein the at least one motorized shelf is movably mounted on at least one sliding rail system, and the controller is configured to:
(a) adjust a position of the motorized shelf horizontally by driving at least two horizontally arranged sliding rails via a motor to move the motorized shelf outward for item retrieval or inward for storage; or
(b) adjust the position of the motorized shelf vertically by driving at least two vertically arranged sliding rails via a motor to move the motorized shelf upward or downward based on the user's identity.

6. The storage container of claim 2, wherein the controller is further configured to:
detect whether the item has been placed on or removed from the at least one motorized shelf; and
in response to detecting that the item has been placed on or removed from the at least one motorized shelf, automatically revert the position of the at least one motorized shelf to a default position.

7. The storage container of claim 1, wherein the illumination system comprises a plurality of indicator lights, and to perform the at least one identity-based operation according to the user identity, the controller is configured to:
selectively activate a subset of the plurality of indicator lights based on the determined user identity to guide the user to a specific item or area within the container body (1).

8. The storage container of claim 1, wherein the container body (1) comprises a plurality of compartments and the illumination system comprises a plurality of indicator lights, to perform the at least one identity-based operation according to the user identity, the controller is configured to:
identify one of the plurality of compartments that is associated with the user identity, and
turn on a subset of the plurality of indicator lights that correspond to the identified compartment to facilitate the user to retrieve or placement an item.

9. The storage container of claim 1, wherein to perform the at least one identity-based operation according to the user identity, the controller is configured to:
adjust at least one of brightness or illumination direction of the illumination system according to the determined user identity, wherein the brightness or the illumination direction is preconfigured by the user.

10. The storage container of claim 1, wherein the container body (1) comprises a plurality of separate compartments, and the biometric scanning device (5) comprises at least one indicator light, and
after the user identity of the user is identified based on the biometric information captured by the biometric scanning device (5), one of the plurality of separate compartments is unlocked, and
the at least one indicator light is configured in a specific illumination pattern that corresponds to the unlocked compartment.

11. The storage container of claim 10, wherein the specific illumination pattern comprises at least one of a shape, a location, a color, a brightness, or a blinking pattern.

12. The storage container of claim 1, wherein to determine the user identity of the user, the controller is further configured to:
determine an estimated age of the user based on the biometric information, and
unlock the door (2) and perform the at least one identity-based operation in response to the estimated age of the user is above a threshold.

13. The storage container of claim 1, wherein the container body (1) comprises a plurality of separate compartments, each compartment having a dedicated compartment door and a dedicated lock, wherein the controller is configured to unlock a compartment door corresponding to the user identity, while maintaining the other compartments locked.

14. The storage container of claim 13, wherein at least one of the plurality of compartments is configured to maintain a controlled environment by including a temperature-regulating device, and
the controller is further configured to:
control the temperature-regulating device to adjust a temperature of that compartment based on predefined settings suitable for items stored in the compartment.

15. The storage container of claim 1, further comprising an inner storage container within the container body (1), the inner storage container having an inner door and an inner lock, wherein the controller is further configured to:
apply different access permissions for the lock (3) and the inner lock, such that the access permission to unlock the inner lock requires additional authentication than the access permission to unlock the lock (3).
